# EUROPEAN PATENT APPLICATION

(11) **EP 4 708 519 A1**
(43) Date of publication of application: **11.03.2026**
(21) Application number: 24840014.5
(22) Date of filing: 05.07.2024
(51) Int. Cl.: H01M 50/262, H01M 50/204, H01M 50/271

(54) **FASTENING DEVICE AND BATTERY PACK COMPRISING FASTENING DEVICE**

(30) Priority: 07.07.2023 KR 20230088453
(71) Applicant: LG Energy Solution, Ltd., Seoul 07335 (KR)
(72) Inventor: KANG, Da Hoon, Daejeon 34122 (KR)
(74) Representative: Plasseraud IP
(86) International application number: PCT/KR2024/009610
(87) International publication number: WO 2025/014202

(57) **Abstract**

A coupling mechanism according to an embodiment of the present invention may include a head part, a screw part provided to be coupled to the head part, and an elastic member configured to elastically connect the head part to the screw part in an internal accommodation space defined when the head part and the screw part are coupled to each other.

## Description

### TECHNICAL FIELD

### CROSS-REFERENCE TO RELATED APPLICATION

The present application claims the benefit of the priority of Korean Patent Application No. 10-2023-0088453, filed on July 7, 2023, which is hereby incorporated by reference in its entirety.

### TECHNICAL FIELD

The present invention relates to a coupling mechanism and a battery pack including the same.

### BACKGROUND ART

Research and development on power generation based on Eco-friendly energy sources are being conducted to solve the problem of environmental pollution and energy source problems caused by the depletion of the petroleum resources. Particularly, research on secondary batteries is actively conducted, and research is being conducted on various aspects of secondary batteries, such as materials, structures, processes, and stability.

A plurality of secondary batteries may be installed and managed as a unit of a module or pack and undergo repeated charging and discharging processes, and a voltage applied to the secondary batteries is increasing to improve energy density. Thus, an internal pressure of the battery module or battery pack may increase due to ignition or gas generation, so it is necessary to secure stability through appropriate control.

According to the related art, there is a possibility that structural stability problems could occur due to insufficient safety devices against the ignition or gas generation.

### DISCLOSURE OF THE INVENTION

### TECHNICAL PROBLEM

An object of the present invention for solving the above problems is to provide a coupling mechanism capable of improving structural stability and a battery pack including the coupling mechanism.

### Technical solution

A coupling mechanism according to an embodiment of the present invention may include a head part, a screw part provided to be coupled to the head part, and an elastic member configured to elastically connect the head part to the screw part in an internal accommodation space defined when the head part and the screw part are coupled to each other.

A battery pack according to an embodiment of the present invention may include an accommodation frame provided to accommodate batteries, a cover lid coupled to the accommodation frame and configured to cover an opened upper portion of the accommodation frame, and a coupling mechanism configured to couple the accommodation frame to the cover lid, wherein the coupling mechanism may include a head part coupled to the cover lid, a screw part coupled to the head part and fixed to the accommodation frame, and an elastic member configured to elastically connect the head part to the screw part in an internal accommodation space defined when the head part and the screw part are coupled to each other.

### ADVANTAGEOUS EFFECTS

According to the preferred embodiment of the present invention, the coupling structure may be adaptively deformed depending on the internal pressure.

According to the preferred embodiment of the present invention, the structural stability may be improved when internal ignition or the high-temperature gas is generated.

### BRIEF DESCRIPTION OF THE DRAWINGS

FIG. 1 is a plan view illustrating a structure of a battery pack according to an embodiment of the present invention.
FIG. 2 is a side cross-sectional view illustrating of the structure of the battery pack according to an embodiment of the present invention.
FIG. 3 is a perspective view of a coupling mechanism according to an embodiment of the present invention.
FIG. 4 is an exploded perspective view illustrating a state when the coupling mechanism is viewed in one direction according to an embodiment of the present invention.
FIG. 5 is an exploded perspective view illustrating a state when the coupling mechanism is viewed in another direction according to an embodiment of the present invention.
FIG. 6 is a partial enlarged view illustrating a hook groove or protrusion of the coupling mechanism according to an embodiment of the present invention.
FIG. 7 is a side view illustrating a state in which the coupling mechanism is separated from the battery pack according to an embodiment of the present invention.
FIG. 8 is a side view illustrating a state in which the coupling mechanism is separated according to an embodiment of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

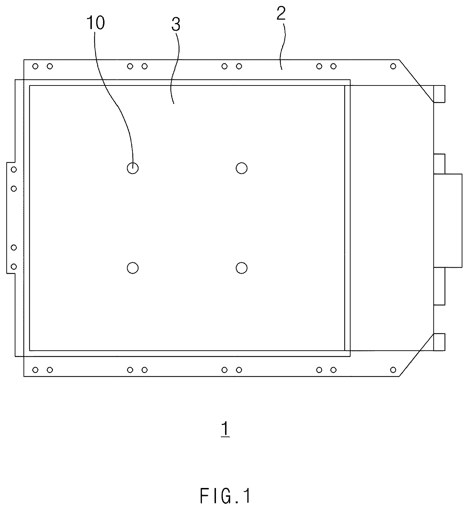

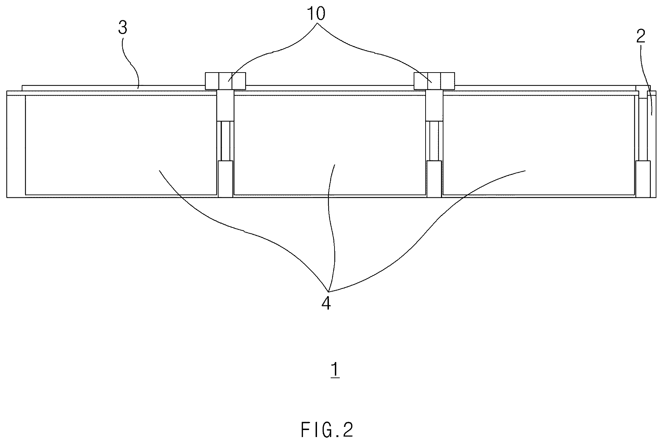

FIG. 1 is a plan view illustrating a structure of a battery pack according to an embodiment of the present invention, and FIG. 2 is a side cross-sectional view illustrating of the structure of the battery pack according to an embodiment of the present invention.

A battery pack 1 may include an accommodation frame 2. The accommodation frame 2 may accommodate secondary batteries therein. The accommodation frame 2 may form at least a portion of an outer surface of the battery pack 1.

The battery pack 1 may include a cover lid 3. The cover lid 3 may form an outer surface of an upper portion of the battery pack 1.

The cover lid 3 may be coupled to the accommodation frame 2 to cover an opened upper portion of the accommodation frame 2.

The battery pack 1 may include a coupling mechanism 10. The coupling mechanism 10 may connect the accommodation frame 2 to the cover lid 3. For example, a portion of the coupling mechanism 10 may be coupled to the cover lid 3, and the other portion of the coupling mechanism 10 may be coupled to the accommodation frame 2.

The battery pack 1 may include an accommodation part 4. The accommodation part 4 may be provided to accommodate the secondary batteries. The accommodation part 4 may be defined by the accommodation frame 2 and the cover lid 3.

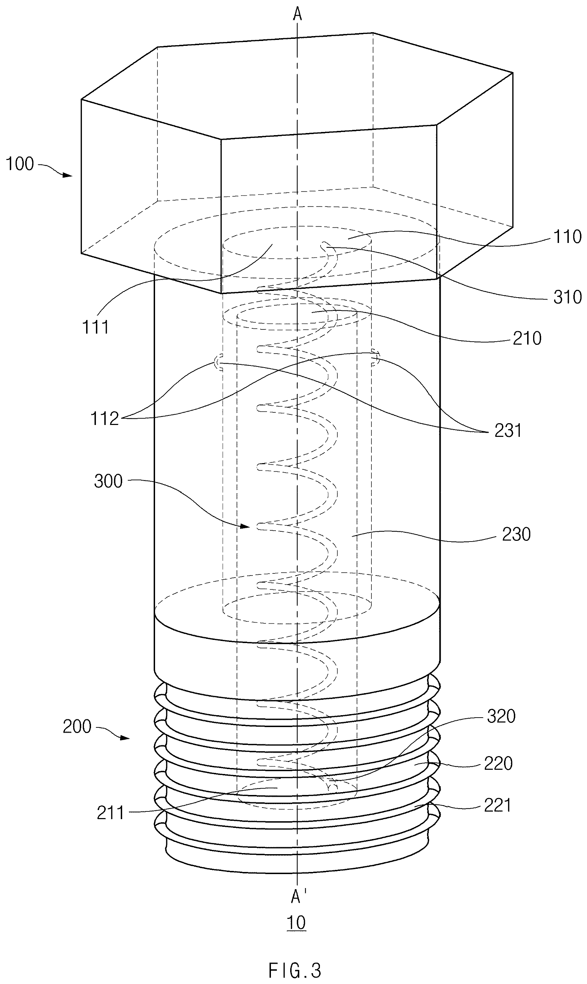

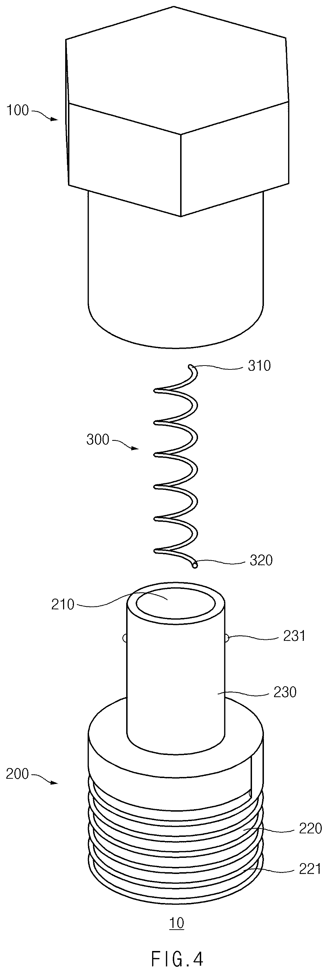

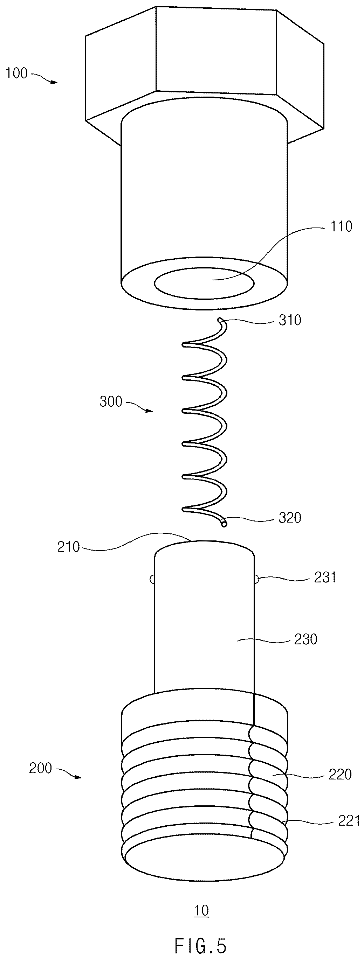

FIG. 3 is a perspective view of the coupling mechanism according to an embodiment of the present invention, FIG. 4 is an exploded perspective view illustrating a state when the coupling mechanism is viewed in one direction according to an embodiment of the present invention, and FIG. 5 is an exploded perspective view illustrating a state when the coupling mechanism is viewed in another direction according to an embodiment of the present invention.

The coupling mechanism 10 may include a head part 100.

The coupling mechanism 10 may include a screw part 200. The screw part 200 may be provided to be coupled to the head part 100.

The coupling mechanism 10 may include an elastic member 300. The elastic member 300 may elastically connect the head part 100 to the screw part 200. The elastic member 300 may be disposed in the internal accommodation space defined when the head part 100 and the screw part 200 are coupled to each other.

A first groove 110 may be formed in the head part 100. One end 310 of the elastic member 300 may be inserted into the first groove 110.

A second groove 210 may be formed in the screw part 200. The other end 320 of the elastic member 300 may be inserted into the second groove 210.

For example, when the head part 100 and the screw part 200 are coupled in the vertical direction, the first groove 110 may be formed to be recessed so that one end 310 of the elastic member 300 is inserted along the vertical direction in the head part 100. In addition, the second groove 210 may be formed to be recessed so that the other end 320 of the elastic member 300 is inserted in the vertical direction in the screw part 200.

The accommodation space of the elastic member 300 may be an internal space defined when the head part 100 and the screw part 200 are connected. For example, the accommodation space may be a space defined by inner surfaces of the first groove 110 and the second groove 210. The inner surfaces may include bottom surfaces (e.g., reference numerals 111 and 211) and the inner side surfaces of the first groove 110 and the second groove 210.

The elastic member 300 may be fixed to the bottom surfaces. For example, the one end 310 may be fixed to the bottom surface 111 of the first groove 110, and the other end 320 may be fixed to the bottom surface 211 of the second groove 210. However, it is not limited thereto, and the elastic member 300 may be fixed at different positions on the inner surfaces of the first groove 110 and the second groove 210.

The screw part 200 may include a body 220. A screw thread 221 may be formed on the body 220.

The screw part 200 may include a protrusion 230. The protrusion 230 may protrude from the body 220. For example, the protrusion 230 may protrude from the body 220 so as to be inserted into the first groove 110. Here, the second groove 210 may be formed by being recessed from the protrusion 230.

The structure may be adaptively transformed according to the internal pressure of the battery pack 1 by the above-described coupling mechanism 10.

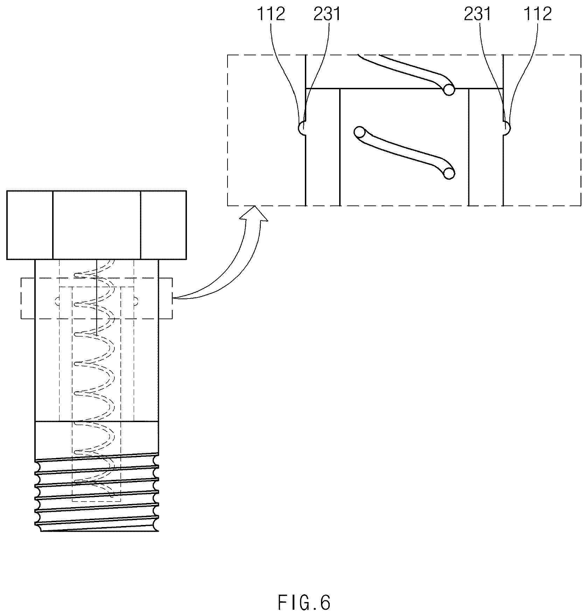

FIG. 6 is a partial enlarged view illustrating a hook groove or protrusion of the coupling mechanism according to an embodiment of the present invention.

A hook groove 112 may be formed in the first groove 110. For example, the hook groove 112 may be provided by being recessed into the inner surface of the first groove 110.

The protrusion 230 may include a projection 231. For example, the projection 231 may protrude from an outer surface of the protrusion 230 so as to be hooked in the hook groove 112.

The projection 231 may be separably hooked in the hook groove 112. For example, when a pressure greater than a predetermined level is applied in a direction in which the head part 100 and the screw part 200 are separated, the projection 231 may be separated from the hook groove 112.

The projection 231 may be hooked in the hook groove 112 so that rotation is restricted. For example, when the head part 100 and the screw part 200 are coupled in the vertical coupling direction, the projection 231 may be hooked in the hook groove 112 so that movement thereof is restricted in the rotational direction with the coupling direction as a rotational axis.

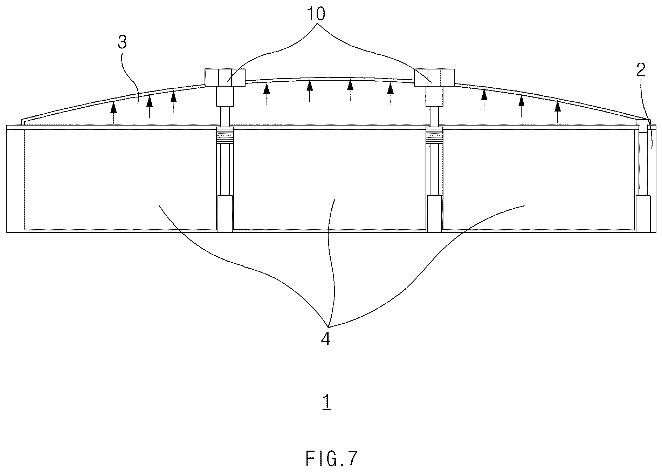

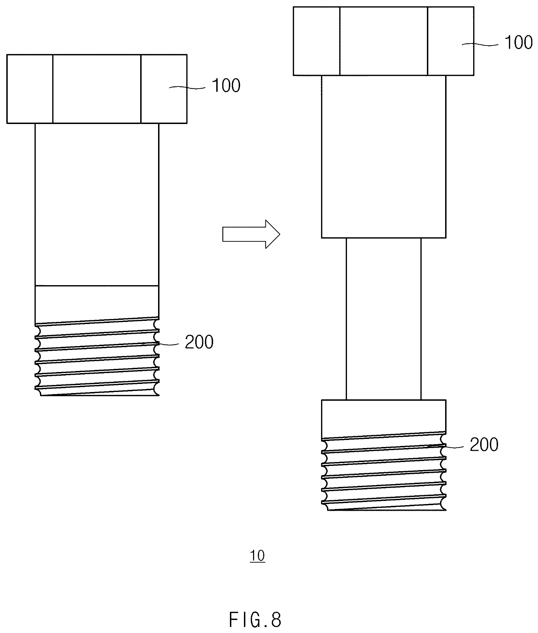

FIG. 7 is a side view illustrating a state in which the coupling mechanism is separated from the battery pack according to an embodiment of the present invention, and FIG. 8 is a side view illustrating a state in which the coupling mechanism is separated according to an embodiment of the present invention.

The elastic member 300 may be stretched under certain circumstances. For example, when a predetermined pressure or more is applied in the direction in which the head part 100 and the screw part 200 are separated, the elastic member 300 may be stretched according to the pressure. Here, the accommodation frame 2 and the cover lid 3 may be separated from each other as the elastic member 300 is stretched.

As described above, if the accommodation frame 2 and the cover lid 3 are separated due to an internal situation of the accommodation part 4 (e.g., ignition, gas generation, etc.), the pressure in the accommodation part 4 may be easily relieved. Thus, structural stability may be improved in the event of the internal ignition or high-temperature gas generation in the battery pack 1.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

1: Battery pack
2: Accommodation frame
3: Cover lid
4: Accommodation part
10: Coupling mechanism
100: Head part
110: First groove
111: Bottom surface
112: Hook groove
200: Screw part
210: Second groove
211: Bottom surface
220: Body
221: Screw thread
230: Protrusion
231: Projection
300: Elastic member
310: One end
320: The other end

## Claims

1. A coupling mechanism comprising:
a head part;
a screw part provided to be coupled to the head part;
and
an elastic member configured to elastically connect the head part to the screw part in an internal accommodation space defined when the head part and the screw part are coupled to each other.

2. The coupling mechanism of claim 1, wherein the head part is provided with a first groove into which one end of the elastic member is inserted, and
the screw part is provided with a second groove into which the other end of the elastic member is inserted.

3. The coupling mechanism of claim 2, wherein, in the elastic member,
the one end is fixed to a bottom surface of the first groove, and
the other end is fixed to a bottom surface of the second groove.

4. The coupling mechanism of claim 2, wherein the screw part comprises:
a body on which a screw thread is formed; and
a protrusion protruding to be inserted into the first groove from the body,
wherein the second groove is formed to be recessed from the protrusion.

5. The coupling mechanism of claim 4, wherein the first groove is provided with a hook groove provided to recessed in an inner surface thereof, and
the protrusion comprises a projection protruding from an outer surface so as to be hooked in the hook groove.

6. The coupling mechanism of claim 5, wherein the projection is separated from the hook groove when a predetermined pressure or more is applied in a direction in which the head part and the screw part are separated from each other.

7. The coupling mechanism of claim 5, wherein the head part and the screw part are coupled to each other in a vertical coupling direction, and
the projection is hooked in the hook groove so that movement thereof is restricted with respect to a rotational direction with the coupling direction as a rotational axis.

8. The coupling mechanism of claim 2, wherein the accommodation space is defined by inner surfaces of the first groove and the second groove.

9. The coupling mechanism of claim 8, wherein the inner surface comprises a bottom surface and an inner side surface.

10. A battery pack comprising:
an accommodation frame provided to accommodate batteries;
a cover lid coupled to the accommodation frame and configured to cover an opened upper portion of the accommodation frame; and
a coupling mechanism configured to couple the accommodation frame to the cover lid,
wherein the coupling mechanism comprises:
a head part coupled to the cover lid;
a screw part coupled to the head part and fixed to the accommodation frame; and
an elastic member configured to elastically connect the head part to the screw part in an internal accommodation space defined when the head part and the screw part are coupled to each other.

11. The battery pack of claim 10, wherein the head part is provided with a first groove into which one end of the elastic member is inserted and which is provided so that the one end is fixed to a bottom surface, and
the screw part is provided with a second groove into which the other end of the elastic member is inserted and which is provided so that the other end is fixed to a bottom surface.

12. The battery pack of claim 10, wherein, when a predetermined pressure or more is applied in a direction in which the head part and the screw part are separated from each other, the elastic member is stretched.

13. The battery pack of claim 12, wherein the accommodation frame and the cover lid are spaced apart from each other as the elastic member is stretched.
